# EUROPEAN PATENT APPLICATION

(11) **EP 1 833 253 A1**
(43) Date of publication of application: **12.09.2007**
(21) Application number: 05822563.2
(22) Date of filing: 23.12.2005
(51) Int. Cl.: H04N 7/173

(54) **METHOD AND APPARATUS FOR BUFFERING STREAMING MEDIA DATA**

(30) Priority: 24.12.2004 CN 200410102851
(71) Applicant: Tencent Technology (Shenzhen) Company Limited, Shenzhen, Guangdon 518044 (CN)
(72) Inventor: WANG, Qi, Zhenxing Rd., Futian District, Shenzhen (CN)
(74) Representative: Skuhra, Udo
(86) International application number: PCT/CN2005/002301
(87) International publication number: WO 2006/066513

(57) **Abstract**

Embodiments of the present invention disclose a method for buffering streaming media, including: determining whether there is no free buffer chunk to buffering streaming media currently in a playing buffer; if so, stopping downloading streaming media from the network; otherwise, buffering the streaming media downloaded from the network in the playing buffer; determining whether the time for playing the streaming media after being buffered in the playing buffer is later than the time for playing the steaming media according to the playing speed; if so, stopping playing streaming media in the buffer chunk; otherwise, playing streaming media in the buffer chunk. In accordance with the present invention, the problem of covering streaming media not being played in playing buffer and playing streaming media disconnectedly caused by the difference between the speed of downloading and playing streaming media is avoided by respectively controlling the process of downloading and playing streaming media. In view of the above, it is possible to guarantee that no error occurs in the process of buffering and playing streaming media, and ensure the quality for playing streaming media. Embodiments of the present invention further disclose an apparatus for buffering streaming media.

## Description

### Method and Apparatus for Buffering Streaming Media

### Field of the Technology

The present invention relates generally to media communication technology, and more particularly, to a method and an apparatus for buffering streaming media.

### Background of the Invention

At present, streaming media has been widely used in the network, by which people can watch or listen to programs from the network in real time. Steaming media allows a user to play a streaming media file while downloading the streaming media file instead of playing the streaming media file after the total streaming media file is completely downloaded, so as to greatly save the time spending on download. Streaming media includes technologies in the process of downloading and playing streaming, which involves streaming media collection, streaming media compression, streaming media transmission, streaming media buffering and streaming media playing etc. technologies. The present invention relates to the technology of buffering streaming media.

Conventionally, a streaming media player downloads streaming media from the network, buffers them in its playing buffer, and plays the downloaded streaming media via the playing buffer. There are two speeds which impact on the time of the process: the speed of downloading streaming media, which depends on the network condition, and the speed of local playing streaming media, which depends on the performance of streaming player itself. It is possible to have a difference between the speed of downloading streaming media and the speed of playing streaming media, which specifically includes the following conditions:

### 1. the speed of downloading streaming media is higher than that of playing streaming media.

In this case, it is possible that the newly downloaded streaming media has reached the playing buffer before the streaming media exist in the playing buffer being played, which causes that a portion of existed streaming media not being played in the playing buffer will be covered by the newly downloaded streaming media thus causing a loss of streaming media and a playing error.

### 2. the speed of downloading streaming media is lower than that of playing streaming media.

In this case, it is possible that all the streaming media exist in the playing buffer has been played before the newly downloaded streaming media reaches the playing buffer, which causes that the streaming media is played disconnectedly thus causing a poor playing quality.

Since the speed of downloading and playing streaming media depend on different factors respectively, it is impossible to make one of the two speeds equal to the other one. As a result, there exists the above problem caused by the different speeds.

### Summary of the Invention

Embodiment of the present invention provides a method and an apparatus for buffering streaming media, by which the problem of covering streaming media not being played in playing buffer and playing streaming media disconnectedly caused by the difference between the speed of downloading streaming media and playing streaming media is avoided by respectively controlling the process of downloading and playing streaming media.

The method for buffering streaming media includes:
downloading streaming media when there is a free buffer chunk in a buffer, buffering the streaming media in the free buffer chunk;
playing streaming media buffered in a buffer chunk when the amount of buffered streaming media meets the requirement for continuously playing streaming media; and releasing the buffer chunk as a free buffer chunk.

The method further includes:
stopping downloading streaming media when there is no free buffer chunk;
stopping playing streaming media when the amount of buffered streaming media does not meet the requirement for continuously playing streaming media.

The method specifically includes:
performing the following steps when a playing buffer receives streaming media:
   Step a: downloading, by the playing buffer, a chunk of streaming media from the network according to the downloading speed;
   Step b: determining whether there is a free buffer chunk in the playing buffer; if there is no free buffer chunk in the playing buffer, stopping, by the playing buffer, downloading streaming media from the network, returning to the beginning of this step until there is a free buffer chunk in the playing buffer; otherwise, extracting one free buffer chunk from the playing buffer, and proceeding to Step c;
   Step c : saving the downloaded streaming media of Step a in the free buffer chunk extracted by Step b; returning the buffer chunk buffering the downloaded streaming media to the playing buffer, and proceeding to Step a until streaming media is completely downloaded;
performing the following steps when a playing buffer plays streaming media:
   Step A: determining whether the number of buffer chunks buffering the streaming media in the playing buffer is less than a pre-defined number, whereby the streaming media buffered in the pre-defined number of buffer chunks can be buffered for a required time; if the number of the buffer chunks buffering the streaming media in the playing buffer is less than that the pre-defined number, stopping, by the playing buffer, playing streaming media in the buffer chunk, and returning to the beginning of this step until the number of buffer chunks buffering the streaming media in the playing buffer is greater than or equal to the pre-defined number; otherwise, proceeding to Step B:;
   Step B: playing streaming media in a buffer chunk which is orderly extracted from the playing buffer according to the playing speed; after streaming media being played returning the free buffer chunk that used to save the played streaming media, and proceeding to Step A until the streaming media is completely played.

The buffer comprises: a free buffer queue, for managing all free buffer chunks; and a media buffer queue, for managing all buffer chunks buffering the streaming media;
Step b includes:
   performing the operation for extracting one free buffer chunk from the free buffer queue, and determining whether the returned value is null; if the returned value is null, indicating that there is no free buffer chunk in the playing buffer, stopping, by the playing buffer, downloading streaming media chunk from the network, and proceeding to Step b ; otherwise, indicating that there is a free buffer chunk in the playing buffer, extracting one free buffer chunk from the playing buffer, and proceeding to Step c;
Step c includes:
   saving the streaming media of Step in the free buffer chunk extracted by Step b; returning the buffer chunk saving the streaming media to the media buffer queue of the playing buffer via a buffer chunk saving operation of the media buffer queue, and proceeding to Step a until the streaming media is completely downloaded;
Step A includes:
   Step A1: determining whether the number of buffer chunk saving streaming media in the media buffer queue is less than the number of buffer chunk corresponding to the time of streaming media required to be buffered in the playing buffer; if the number of existed buffer chunk of the media buffer queue is less than the number of buffer chunk corresponding to the time of streaming media required to be buffered in the playing buffer, stopping, by the playing buffer, playing the streaming media saved in buffer chunk, and returning to the beginning of this step until the number of existed buffer chunk saving streaming media in the media buffer queue is greater than or equal to the number of buffer chunk corresponding to the time of streaming media required to be buffered in the playing buffer; otherwise, proceeding to Step A2;
   Step A2: playing, by the playing buffer, streaming media in a buffer chunk which is extracted from the media buffer queue according to the playing speed; performing a free buffer chunk saving operation for the free buffer queue, returning a free buffer chunk that used to save the played streaming media to a free buffer queue of the playing buffer, and proceeding to Step A1 until the streaming media is completely played.

A downloading buffer is preset, which is unable to cover those streaming media not being extracted by the playing buffer with the streaming media downloaded from the network; step a includes:
acquiring, by the downloading buffer, streaming media from a streaming server via the network, and acquiring, by the playing buffer, streaming media from the downloading buffer; step b includes:
stopping, by the playing buffer, acquiring streaming media chunk from the downloading buffer, and stopping, by the downloading buffer, downloading streaming media from a streaming server via the network since the streaming media of downloading buffer is unextraced and can not be covered by the newly downloaded streaming media.

The method further includes:
pre-computing a value for dividing the total time of streaming media need to be buffered before being played by the buffer chunk duration, which is taken as the pre-defined number of buffer chunks.

An apparatus for buffering streaming media, includes:
a buffering module, for buffering downloaded streaming media;
a downloading module, for downloading streaming media when there is a free buffer chunk in the buffering module;
a playing module, for playing streaming media in the buffering module when the current amount of buffered streaming media in the buffering module meets the requirement for continuously playing streaming media and releasing the buffer chunk buffering the streaming media as a free buffer chunk.

The buffering module includes:
a free buffer queue, for managing free buffer chunks of the buffering module;
a media buffer queue, for managing buffer chunks buffering streaming media of the buffering module.

The downloading module is further used for stopping downloading the streaming media when there is no free buffer chunk in the buffering module; and
the playing module is further used for stopping playing streaming media when the current amount of buffered streaming media in the buffering module does not meet the requirement for continuously playing streaming media.

The downloading module further includes:
a downloading submodule, used for downloading streaming media, and buffering the downloaded streaming media in its downloading buffer;
a media extracting submodule, used for acquiring streaming media from the downloading buffer, buffering the streaming media in the buffering module when there is a free buffer chunk in the buffering module, and stopping downloading streaming media when there is no free buffer chunk in the buffering module.

The downloading buffer is preset that the downloaded streaming media is unable to cover the streaming media not being extracted.

As can be seen, in an embodiment of the present invention, determine whether the problem that the streaming media not being played is covered would occurs, which caused by the speed of downloading is higher than the speed of playing streaming media, by determining in real time whether there is a free buffer currently to buffer downloaded streaming media currently in the playing buffer, when the problem would occurs, stop downloading streaming media to avoid the problem; in an embodiment of the present invention, determine whether the problem of playing streaming media disconnectedly would occurs, which caused by the speed of playing is higher than the speed of downloading streaming media, by determining in real time whether the time of playing the streaming media buffered in the playing buffer is later than the time of playing the steaming media according to the playing speed, when the problem would occurs, stop playing the current streaming media to avoid the problem. In view of the above, it is possible to guarantee that no error occurs in the process of buffering and playing streaming media, and ensure the quality for playing streaming media.

### Brief Description of the Drawings

Figure 1 is a flowchart illustrating the step of receiving streaming media by a playing buffer in accordance with a preferred embodiment of the present invention.
Figure 2 is a flowchart illustrating the step of playing streaming media by a playing buffer in accordance with a preferred embodiment of the present invention.
Figure 3 shows a schematic diagram of the apparatus in accordance with one embodiment of the present invention.
Figure 4 shows a schematic diagram of the apparatus in accordance with another embodiment of the present invention.

### Detailed Description of the Invention

Embodiments of the present invention provide a method and an apparatus for buffering streaming media. In accordance with the present invention, the problem of covering streaming media not being played in playing buffer and playing streaming media disconnectedly caused by the difference between the speed of downloading and playing streaming media is avoided by respectively controlling the process of downloading and playing streaming media.

The basic idea of the present invention is that, the playing buffer downloads streaming media according to the downloading speed and buffers the downloaded streaming media in free buffer chunks, plays the buffered streaming media according to the playing speed, and releases the buffer chunk that used to saving the played streaming media as free buffer chunk after playing the streaming media; at the same time, the method further includes the following determination in real time specifically including:
determining in real time whether there is a free buffer chunk to buffer the currently downloaded streaming media in the playing buffer; if so, stopping downloading streaming media, and returning to the beginning of this step and determining continuously; otherwise, downloading streaming media and buffering the streaming media downloaded in the free buffer chunk in the playing buffer;
determining in real time whether the time for playing the streaming media in the playing buffer after being buffered is later than the time for playing the steaming media according to the playing speed; if so, stopping playing the current streaming media, and return to the beginning of this step for determining continuously; otherwise, playing the streaming media in a buffer and releasing the buffer as a free buffer chunk.

The method provided by the present invention is hereinafter described in detail.

The buffer in an embodiment of the present invention can be various kind of buffer, for example, a playing buffer in a streaming media player. The method of the present invention is implemented by using a buffer chunk to buffer streaming media in a preferred embodiment of the present invention includes the following steps.

When a playing buffer receives streaming media, the following steps are performed.

Step a: the playing buffer downloads a chunk of streaming media from the network according to the downloading speed.

Step b: determine whether there is a free buffer chunk in the playing buffer; if so, extract one free buffer chunk from the playing buffer; otherwise, the playing buffer stops downloading streaming media from the network, returning to the beginning of this step until there is a free buffer chunk in the playing buffer.

Step c: save the downloaded streaming media of Step a in the free buffer chunk extracted by Step b, return the buffer chunk saving the downloaded streaming media to the playing buffer, and return to Step a until streaming media is completely downloaded.

When a playing buffer plays streaming media, the following steps are performed.

Step A: determining whether the number of the existed buffer chunk saving streaming media in the playing buffer is greater than or equal to the number of buffer chunk corresponding to the time of streaming media required to be buffered in the playing buffer; if so, play streaming media; otherwise, the playing buffer stop playing the streaming media, and returning to the beginning of this step until the number of the existed buffer chunk saving streaming media in the playing buffer is greater than or equal to the number of buffer chunk corresponding to the time of streaming media required to be buffered in the playing buffer.

Step B: playing streaming media in one buffer chunk which is orderly extracted from the playing buffer according to the playing speed; after streaming media being played ,return a free buffer chunk that used to save the played streaming media to the playing buffer, and return to determining whether the number of the existed buffer chunk saving streaming media in the playing buffer is greater than or equal to the number of buffer chunk corresponding to the time of streaming media required to be buffered in the playing buffer until streaming media is completely played.

Preferred embodiment of the present invention is now made to the following description taken in conjunction with the accompanying drawings of the invention.

Several variables associated with embodiments of the present invention are first described herein:
A total number of buffer chunks (ChunkNum) indicates the total number of buffer chunk existed in a playing buffer for buffering streaming media;
A buffer chunk duration (ChunkDuration) indicates a period of time in which streaming media is buffered in a buffer chunk;

A buffer time (BufferTime) indicates a period of time in which streaming media requires to be buffered in a playing buffer i.e. streaming media in the playing buffer may be allowed to be played only when the time of streaming media having been buffered in the playing buffer not less than BufferTime.

The above three variable may be adjusted according to practical tests to select an optimal value. In a practical test of production, ChunkNum may be set to 10, ChunkDuration may be set to 2 seconds, and BufferTime may be set to 6 seconds; other values may also be respectively set as required practically for the above three variables, which does not intend to limit the present invention.

In an embodiment of the present invention, a free buffer queue and a media buffer queue are involved in a playing buffer in order to control the downloading speed and the playing speed. The free buffer queue is used for managing all free buffer chunks with no streaming media, and the media buffer queue is used for managing all buffer chunks with streaming media which is to be played. These two buffer queues is designed to operate based on the principle of First-In First-Out (FIFO) of streaming media.

### The operation of the free buffer queue includes:

Get free buffer chunk (GetFreeBuffer) operation for extracting one free buffer chunk from a free buffer queue while decreasing the current number of free buffer chunk by one; if there is no free buffer chunk in the free buffer queue while performing the operation, returns null.

Put free buffer chunk (PutFreeBuffer) operation for returning one free buffer chunk to the free buffer queue while increasing the current number of free buffer chunk by one.

The operation of the media buffer queue includes:

Get media buffer chunk (GetMediaBuffer) operation for extracting one buffer chunk saving streaming media from a media buffer queue in order to play streaming media saved in the buffer chunk while decreasing the current number of buffer chunk by one; if there is no buffer chunk in the media buffer queue while performing the operation, the returns null;

Put media buffer chunk (PutMediaBuffer) operation for saving one buffer chunk saving streaming media in a media buffer queue while increasing the current number of buffer chunk by one, and the steaming media is to be played.

All buffer chunks of the playing buffer are saved in a free buffer queue before starting buffering streaming media, i.e. the number of buffer chunk in the free buffer queue is equal to ChunkNum, and the number of buffer chunk in the media buffer queue is equal to 0.

Preferred embodiment of the present invention with the above settings comprises the following steps.

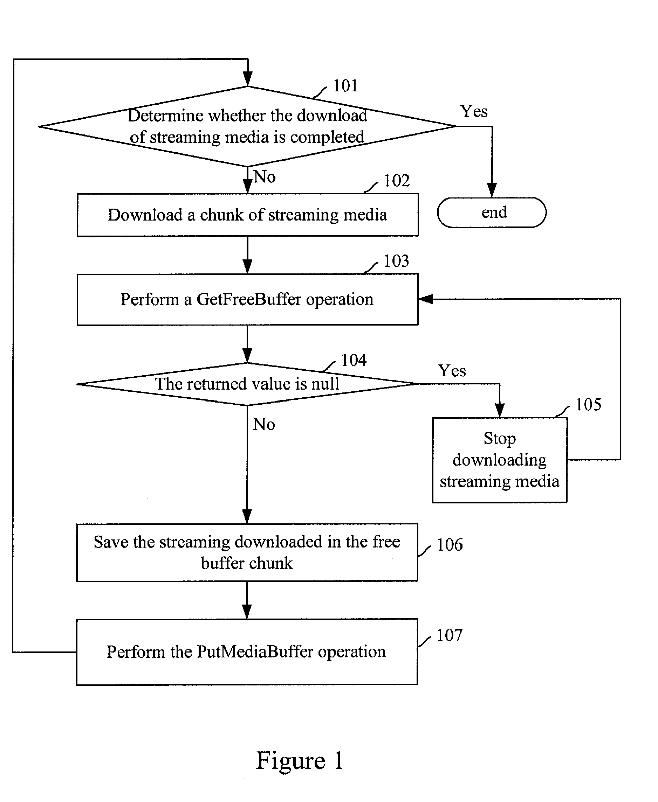

Figure 1 shows a flowchart illustrating the step of receiving streaming media by a playing buffer. As shown in Figure 1, the following steps are performed.

Step 101: Determine whether streaming media has been downloaded completely; if so, terminate this process; otherwise, proceed to Step 102.

Step 102: The playing buffer downloads a chunk of streaming media from the network. A downloading buffer is involved for receiving and buffering the streaming media downloaded from the network in order to make the method conveniently. The downloading buffer acquires streaming media from a streaming server via the network, and the playing buffer acquires streaming media from the downloading buffer. The operation of the downloading buffer is limited that it is unable to cover the streaming media not being extracted by the playing buffer with streaming media downloaded from the network, by which the control for the downloading speed is implemented with respect to the subsequent detailed process.

In other embodiments of the present invention, a playing buffer may also acquire streaming media chunk from a streaming server via the network directly without a downloading buffer.

Steps 103-104: Perform a GetFreeBuffer operation for a free buffer queue, determine whether the returned value is null; if so, it is indicated that there is no free buffer chunk currently in the free buffer queue; correspondingly, each buffer chunk in the playing buffer saves streaming media currently; to avoid that the streaming media acquired from the network cover the streaming media not being played of the playing buffer, proceed to Step 105; otherwise, it is indicated that there is at least one free buffer chunk that is able to save the received streaming media, proceed to Step 106.

Step 105: The playing buffer stops downloading streaming media from the network, and go back to Step 103 until the returned value of the operation for extracting a free buffer chunk from the free buffer queue is not null.

In an embodiment of the present invention, the playing buffer stops acquiring streaming media from the downloading buffer, after which the downloading buffer stops downloading streaming media from a streaming server via the network since its streaming media not being extracted can not be covered by the newly downloaded streaming media according to the above limitation made for the downloading buffer, thus controlling the downloading speed.

In other embodiments of the present invention, the playing buffer may also stop downloading streaming media from a streaming server over the network directly without a downloading buffer, thus controlling the downloading speed.

Steps 106-107: Save the streaming media downloaded in Step 102 in the free buffer chunk extracted in Step 103, return the buffer chunk saving the streaming media to the media buffer queue of the playing buffer by performing the PutMediaBuffer operation, and proceed to Step 101 until the streaming media is completely downloaded.

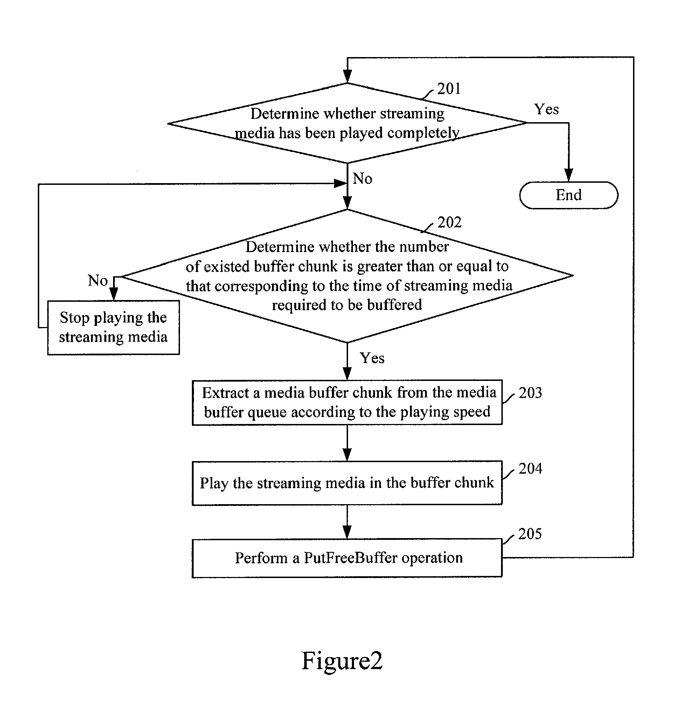

Figure 2 shows a flowchart illustrating the step of playing streaming media by a playing buffer. As shown in Figure 2, the following steps are performed.

Step 201: Determines whether streaming media has been played completely; if so, terminates this procedure; otherwise, proceeds to Step 202.

Step 202: The playing buffer determines whether the number of existed buffer chunk saving streaming media in the media buffer queue is greater than or equal to the number of buffer chunk corresponding to the time of streaming media required to be buffered in the playing buffer; if so, proceeds to Step 203; otherwise, stops playing the streaming media saved in buffer chunk , and returns to the beginning of this step until the number of the existed buffer chunk saving streaming media in the playing buffer is greater than or equal to the number of buffer chunk corresponding to the time of streaming media required to be buffered in the playing buffer.

The number of buffer chunk corresponding to the time of streaming media required to be buffered in the playing buffer is pre-computed in accordance with the present invention before buffering streaming media, which is obtained through dividing BufferTime by ChunkDuration, i.e. BufferTime / ChunkDuration .

Step 203: The playing buffer extracts a media buffer chunk from the media buffer queue according to the playing speed.

Steps 204-205: The playing buffer plays the streaming media in the buffer chunk extracted from the media buffer queue, performs a PutFreeBuffer operation for the free buffer queue, returns a free buffer chunk that used to save the played streaming media to the free buffer queue in the playing buffer, and go back to Step 201 until streaming media is completely played.

The apparatus provided by the present invention is hereinafter described in detail taken in conjunction with the accompanying drawings.

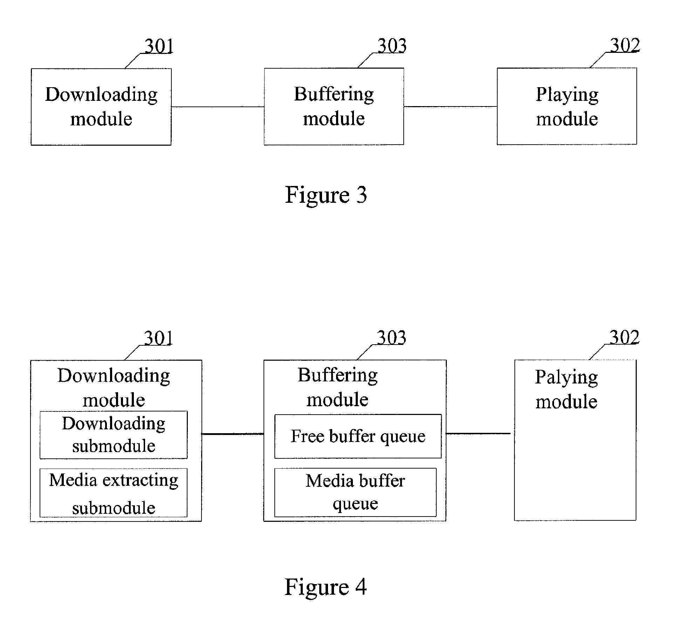

Figure 3 shows a schematic diagram of the apparatus in accordance with one embodiment of the present invention.

Referring to Figure 3, the apparatus of the present invention includes: Downloading module 301, Playing module 302 and Buffering module 303; the Downloading module 301 is used for downloading streaming media; the Playing module 302 is used for playing the downloaded streaming media; the Buffering module 303 is used for buffering the downloaded streaming media.

In the process of downloading and playing streaming media, Downloading module 301 determines whether there is a free buffer chunk in the Buffering module 302, and stops downloading streaming media as there is no free buffer chunk.

Playing module 302 determines whether the current number of streaming media buffered in Buffering module 303 meets the requirement for continuously playing streaming media; if so, plays the streaming media in Buffering module 303 and releases the buffer chunk saving the streaming media as a free buffer chunk; otherwise, stops playing streaming media.

Figure 4 shows a schematic diagram of the apparatus in accordance with one embodiment of the present invention.

Referring to Figure 4, in an embodiment of the present invention, Buffering module 303 consists of a free buffer queue and a media buffer queue; the free buffer queue is used for managing free buffer chunks of Buffering module 303; the media buffer queue is used for managing the buffers with streaming media in Buffering module 303.

In the process of downloading streaming media, Downloading module 301 performs a GetFreeBuffer operation for the free buffer queue to extract a free buffer chunk for buffering the downloaded streaming media, and performing a PutMediaBuffer operation for the media buffer queue to put the buffer chunk with the downloaded streaming media as a media buffer chunk into the media buffer queue; if there is no free buffer chunk in the free buffer queue, the returned value of GetFreeBuffer operation is null; thus the Downloading module 301 determines that there is no free buffer chunk in the Buffering module 303 according to the returned result.

In the process of playing streaming media, Playing module 302 determines whether the current number of buffer chunks with streaming media of the media buffer queue meets the requirement for continuously playing streaming media; if so, Playing module 302 performs a GetMediaBuffer operation for the media buffer queue to play the streaming media in the extracted buffer chunk and release the buffer chunk as a free buffer chunk; otherwise, Playing module 302 stops playing streaming media; Playing module 302 performs a PutFreeBuffer operation for the free buffer queue to return the released free buffer chunk to the free buffer queue.

In an embodiment of the present invention as shown in Figure 4, the downloading module consists of a downloading submodule and a media extracting submodule, wherein:
the downloading submodule is used for downloading streaming media, and buffering the downloaded streaming media in downloading buffer of the downloading submodule.
the media extracting submodule is used for acquiring streaming media from the downloading buffer, buffering the streaming media in the buffering module when there is a free buffer chunk in the buffering module, and stopping downloading streaming media when there is no free buffer chunk in the buffering module.

In a preferred embodiment of the present invention, the downloading buffer of the downloading submodule is preset that the streaming media downloaded from the network can not cover those streaming media not being extracted by the media extracting submodule, so that the downloading module may automatically stop downloading streaming media in the case that there is no free buffer in the buffering module; in other embodiments of the present invention, other ways may be used to stop downloading streaming media, which does not impact the implementation of the present invention.

The foregoing is only preferred embodiments of the present invention and is not for use in limiting the present invention. Any modification, equivalent replacement or improvement made under the spirit and principles of the present invention is included in the protection scope thereof.

## Claims

1. A method for buffering streaming media, comprising:
downloading streaming media when there is a free buffer chunk in a buffer, buffering the streaming media in the free buffer chunk;
playing streaming media buffered in a buffer chunk when the amount of buffered streaming media meets the requirement for continuously playing streaming media; and releasing the buffer chunk as a free buffer chunk.

2. The method of Claim 1, further comprising:
stopping downloading streaming media when there is no free buffer chunk;
stopping playing streaming media when the amount of buffered streaming media does not meet the requirement for continuously playing streaming media.

3. The method of Claim 2, specifically comprising:
performing the following steps when a playing buffer receives streaming media:
Step a: downloading, by the playing buffer, a chunk of streaming media from the network according to the downloading speed;
Step b: determining whether there is a free buffer chunk in the playing buffer; if there is no free buffer chunk in the playing buffer, stopping, by the playing buffer, downloading streaming media from the network, returning to the beginning of this step until there is a free buffer chunk in the playing buffer; otherwise, extracting one free buffer chunk from the playing buffer, and proceeding to Step c;
Step c : saving the downloaded streaming media of Step a in the free buffer chunk extracted by Step b; returning the buffer chunk buffering the downloaded streaming media to the playing buffer, and proceeding to Step a until streaming media is completely downloaded;
performing the following steps when a playing buffer plays streaming media:
Step A: determining whether the number of buffer chunks buffering the streaming media in the playing buffer is less than a pre-defined number, whereby the streaming media buffered in the pre-defined number of buffer chunks can be buffered for a required time; if the number of the buffer chunks buffering the streaming media in the playing buffer is less than that the pre-defined number, stopping, by the playing buffer, playing streaming media in the buffer chunk, and returning to the beginning of this step until the number of buffer chunks buffering the streaming media in the playing buffer is greater than or equal to the pre-defined number; otherwise, proceeding to Step B:;
Step B: playing streaming media in a buffer chunk which is orderly extracted from the playing buffer according to the playing speed; after streaming media being played returning the free buffer chunk that used to save the played streaming media, and proceeding to Step A until the streaming media is completely played.

4. The method of Claim 3, wherein the buffer comprises:
a free buffer queue, for managing all free buffer chunks; and
a media buffer queue, for managing all buffer chunks buffering the streaming media;
the said Step b comprises:
performing the operation for extracting one free buffer chunk from the free buffer queue, and determining whether the returned value is null; if the returned value is null, indicating that there is no free buffer chunk in the playing buffer, stopping, by the playing buffer, downloading streaming media chunk from the network, and proceeding to Step b ; otherwise, indicating that there is a free buffer chunk in the playing buffer, extracting one free buffer chunk from the playing buffer, and proceeding to Step c;
the said Step c comprises:
saving the streaming media of Step in the free buffer chunk extracted by Step b; returning the buffer chunk saving the streaming media to the media buffer queue of the playing buffer via a buffer chunk saving operation of the media buffer queue, and proceeding to Step a until the streaming media is completely downloaded;
the said Step A comprises:
Step A1: determining whether the number of buffer chunk saving streaming media in the media buffer queue is less than the number of buffer chunk corresponding to the time of streaming media required to be buffered in the playing buffer; if the number of existed buffer chunk of the media buffer queue is less than the number of buffer chunk corresponding to the time of streaming media required to be buffered in the playing buffer, stopping, by the playing buffer, playing the streaming media saved in buffer chunk, and returning to the beginning of this step until the number of existed buffer chunk saving streaming media in the media buffer queue is greater than or equal to the number of buffer chunk corresponding to the time of streaming media required to be buffered in the playing buffer; otherwise, proceeding to Step A2;
Step A2: playing, by the playing buffer, streaming media in a buffer chunk which is extracted from the media buffer queue according to the playing speed; performing a free buffer chunk saving operation for the free buffer queue, returning a free buffer chunk that used to save the played streaming media to a free buffer queue of the playing buffer, and proceeding to Step A1 until the streaming media is completely played.

5. The method of Claim 3 or 4, wherein a downloading buffer is preset, which is unable to cover those streaming media not being extracted by the playing buffer with the streaming media downloaded from the network; the said step a comprises:
acquiring, by the downloading buffer, streaming media from a streaming server via the network, and acquiring, by the playing buffer, streaming media from the downloading buffer; the said step b comprises:
stopping, by the playing buffer, acquiring streaming media chunk from the downloading buffer, and stopping, by the downloading buffer, downloading streaming media from a streaming server via the network since the streaming media of downloading buffer is unextraced and can not be covered by the newly downloaded streaming media.

6. The method of Claim 3, further comprising:
pre-computing a value for dividing the total time of streaming media need to be buffered before being played by the buffer chunk duration, which is taken as the pre-defined number of buffer chunks.

7. An apparatus for buffering streaming media, comprising:
a buffering module, for buffering downloaded streaming media;
a downloading module, for downloading streaming media when there is a free buffer chunk in the buffering module, and buffering the downloaded streaming media in the free buffer chunk;
a playing module, for playing streaming media in the buffering module when the current amount of buffered streaming media in the buffering module meets the requirement for continuously playing streaming media and releasing the buffer chunk buffering the streaming media as a free buffer chunk.

8. The apparatus of Claim 7, wherein the buffering module comprises:
a free buffer queue, for managing free buffer chunks of the buffering module;
a media buffer queue, for managing buffer chunks buffering streaming media of the buffering module.

9. The apparatus of Claim 7 or 8, wherein the downloading module is further used for stopping downloading the streaming media when there is no free buffer chunk in the buffering module; and
the playing module is further used for stopping playing streaming media when the current amount of buffered streaming media in the buffering module does not meet the requirement for continuously playing streaming media.

10. The apparatus of Claim 9, wherein the downloading module further comprises:
a downloading submodule, used for downloading streaming media, and buffering the downloaded streaming media in its downloading buffer;
a media extracting submodule, used for acquiring streaming media from the downloading buffer, buffering the streaming media in the buffering module when there is a free buffer chunk in the buffering module, and stopping downloading streaming media when there is no free buffer chunk in the buffering module.

11. The apparatus of Claim 10, wherein the downloading buffer is preset that the downloaded streaming media is unable to cover the streaming media not being extracted.
